(19) Europäisches Patentamt
European Patent Office
Office européen des brevets

(11) EP 0 607 812 B1

(12) EUROPÄISCHE PATENTSCHRIFT

(45) Veröffentlichungstag und Bekanntmachung des Hinweises auf die Patenterteilung:
**01.04.1998 Patentblatt 1998/14**

(51) Int Cl.⁶: **C08K 3/00**, C08K 3/02, C08K 13/02, C08K 5/00, C08L 77/00

(21) Anmeldenummer: **94100142.2**

(22) Anmeldetag: **07.01.1994**

(54) **Flammgeschützte schwarzeingefärbte Polyamidformmassen**

Flame-resistant black-coloured polyamide mouldings

Masses à mouler en polyamide colorées en noir et iguifugées

(84) Benannte Vertragsstaaten:
**BE CH DE ES FR GB IT LI NL**

(30) Priorität: **21.01.1993 DE 4301541**

(43) Veröffentlichungstag der Anmeldung:
**27.07.1994 Patentblatt 1994/30**

(73) Patentinhaber: **BASF Aktiengesellschaft**
**67063 Ludwigshafen (DE)**

(72) Erfinder:
- **Baierweck, Petra, Dr.**
  **D-67459 Boehl-Iggelheim (DE)**
- **Zeltner, Doris, Dr.**
  **D-67354 Roemerberg (DE)**
- **Gareiss, Brigitte, Dr.**
  **D-67071 Ludwigshafen (DE)**
- **Goerrissen, Heiner, Dr.**
  **D-67069 Ludwigshafen (DE)**
- **Ulmerich, Karlheinz**
  **D-67245 Lambsheim (DE)**
- **Muehlbach, Klaus, Dr.**
  **D-67269 Gruenstadt (DE)**
- **Gall, Michael**
  **D-68165 Mannheim (DE)**

(56) Entgegenhaltungen:
**EP-A- 0 019 768**
**EP-A- 0 255 901**
**EP-A- 0 278 555**
**EP-A- 0 312 471**
**EP-A- 0 332 965**

- **DATABASE WPI Section Ch, Week 8330, Derwent Publications Ltd., London, GB; Class A84, AN 83-720839 & JP-A-58 104 218 (OZAKI) 21. Juni 1983**
- **PATENT ABSTRACTS OF JAPAN vol. 003, no. 003 (C-033)16. Januar 1979 & JP-A-53 124 564 (PENTEL) 31. Oktober 1978**
- **PATENT ABSTRACTS OF JAPAN vol. 011, no. 013 (C-397)14. Januar 1987 & JP-A-61 190 557 (TOHO RAYON) 25. August 1986**

Bemerkungen:
Die Akte enthält technische Angaben, die nach dem Eingang der Anmeldung eingereicht wurden und die nicht in dieser Patentschrift enthalten sind.

EP 0 607 812 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Die Erfindung betrifft flammgeschützte schwarze thermoplastische Formmassen, enthaltend

A) 5 bis 98,9 Gew.-% eines thermoplastischen Polyamids

B) 1 bis 20 Gew.-% roter Phosphor

C) 0,1 bis 5 Gew.-% eines komplementärfarbigen grün-, blau- oder violettfarbigen Pigmentes oder deren Mischungen

D) 0 bis 30 Gew.-% eines kautschukelastischen Polymerisates

E) 0 bis 50 Gew.-% eines faser- oder teilchenförmigen Füllstoffes oder deren Mischungen

F) 0 bis 70 Gew.-% eines Polyphenylenethers

G) 0 bis 30 Gew.-% übliche Zusatzstoffe und Verarbeitungshilfsmittel, wobei zusätzliche Pigmente und Farbstoffe, verschieden von C), in Mengen bis zu 1 gew% enthalten sind,

wobei die Gewichtsprozente der Komponenten A bis G jeweils 100 % ergeben.

Weiterhin betrifft die Erfindung die Verwendung derartiger Formmassen zur Herstellung von Fasern, Folien und Formkörpern sowie die aus dessen Formmassen erhältlichen Formkörper.

Die Einfärbung von Thermoplasten, insbesondere von Polyamiden ist seit langem bekannt (s. z.B. Technisches Informationsblatt über Heliogen®-Pigmente der BASF AG, 1980).

Die Verwendung von rotem Phosphor als Flammschutzmittel für Polyamide ist u.a. aus der DE-A 19 31 387 oder DE-A-19 67 354 bekannt.

Zur Schwarzeinfärbung werden üblicherweise Ruß oder Nigrosine für Polyamide verwendet, wobei je nach Menge dieser Additive oder deren Abmischung mit anderen Farbmitteln, wie aus der EP-A-157 756 bekannt ist, Grau- bis Schwarztöne jeglicher Farbschattierung erzielt werden können.

Phosphorflammgeschützte Polyamide, die mit dem organischen Pigment Nigrosin schwarz eingefärbt sind, weisen eine unzureichende Phosphorstabilität sowie Lichtechtheit auf und sind arbeitstechnisch sowie im Hinblick auf Umweltaspekte bedenklich. Mit Ruß eingefärbte Phosphor enthaltende Polyamidformkörper sind nur bedingt für Anwendungen in der Elektronik- und Elektrikindustrie geeignet, da die Kriechstromfestigkeit (CTI) und andere elektrische Eigenschaften unzureichend sind (siehe EP-A-278 555).

Aufgabe der vorliegenden Erfindung war es daher, schwarze flammgeschützte Polyamidformmassen zur Verfügung zu stellen, die eine gute Lichtechtheit und gute elektrische Eigenschaften, insbesondere eine gute Kriechstromfestigkeit aufweisen und gleichzeitig eine gute Phosphorstabilität zeigen.

Demgemäß wurden die eingangs definierten thermoplastischen Formmassen gefunden. Bevorzugte Ausführungsformen sind den Unteransprüchen zu entnehmen.

Als Komponente A) enthalten die erfindungsgemäßen Formmassen 5 bis 98,9, bevorzugt 20 bis 98 und insbesondere 30 bis 95 Gew.-% eines thermoplastischen Polyamids.

Die Polyamide der erfindungsgemäßen Formmassen weisen im allgemeinen eine relative Viskosität $\eta_{rel}$ von 1,7 bis 5,0 auf, bestimmt in einer 1 gew.-%-igen Lösung in 96 gew.%iger Schwefelsäure bei 25°C, was einem K-Wert (nach Fikentscher) von 50 bis 96 entspricht. Polyamide mit einer relativen Viskosität von 2,3 bis 4,5, insbesondere von 2,5 bis 4,0 werden bevorzugt verwendet.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin, Di-(4-aminophenyl)methan, Di-(4-aminocyclohexyl)-methan, 2,2-Di-(4-aminophenyl)-propan oder 2,2-Di-(4-aminocyclohexyl)-propan.

Bevorzugte Polyamide sind Polyhexamethylenadipinsäureamid, Polyhexamethylensebacinsäureamid und Polycaprolactam.

Außerdem seien auch noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Derartige teilaromatische, teilkristalline Copolyamide sind aufgebaut aus:

$A_1$) 20 - 90 Gew.-% Einheiten, die sich von Terephthalsäure und Hexamethylendiamin ableiten,

$A_2$) 0 - 50 Gew.-% Einheiten, die sich von ε-Caprolactam ableiten und

$A_3$) 0 - 80 Gew.-% Einheiten, die sich von Adipinsäure und Hexamethylendiamin ableiten,

$A_4$) 0 - 40 Gew.-% weiteren polyamidbildenden Monomeren,

wobei der Anteil der Komponente ($A_2$) oder ($A_3$) oder ($A_4$) oder deren Mischungen mindestens 10 Gew.-% beträgt.

Die Komponente A1) enthält 20 - 90 Gew.-% Einheiten, die sich von Terephthalsäure und Hexamethylendiamin ableiten.

Neben den Einheiten, die sich von Terephthalsäure und Hexamethylendiamin ableiten, enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Der Anteil an Einheiten, die sich von ε-Caprolactam ableiten, beträgt maximal 50 Gew.-%, vorzugsweise 20 bis 50 Gew.-%, insbesondere 25 bis 40 Gew.-%, während der Anteil an Einheiten die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten $A_1$) und 20 bis 50, vorzugsweise 25 bis 40 Gew.-% Einheiten, die sich von ε-Caprolactam ableiten (Einheiten $A_2$)) enthalten, erwiesen.

Neben den vorstehend beschriebenen Einheiten $A_1$) bis $A_3$) können die teilaromatischen Copolyamide in Mengen bis 40, vorzugsweise 10 - 30 Gew.-% und insbesondere 20 - 30 Gew.-% an weiteren polyamidbildenden Monomeren $A_4$) enthalten; wie sie von anderen Polyamiden bekannt sind.

Aromatische Dicarbonsäuren $A_4$) weisen 8 bis 16 Kohlenstoffatome auf. Geeignete aromatische Dicarbonsäuren sind beispielsweise Isophthalsäure, substituierte Terephthal- und Isophthalsäuren wie 3-t-Butylisophthalsäure, mehrkernige Dicarbonsäuren, z. B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphtalindicarbonsäure, Phenoxyterephthalsaure, wobei Isophthalsäure besonders bevorzugt sind.

Weitere polyamidbildende Monomere $A_4$) können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsauren bzw. entsprechenden Lactamen mit 7 bis 12 Kohlenstoffatomen ableiten. Als geeignete Monomere dieser Typen seien hier nur Suberinsäure, Azelainsäure oder Sebacinsäure als Vertreter der aliphatischen Dicarbonsäuren, 1,4-Butandiamin, 1,5-Pentandiamin, Piperazin, 4,4'-Diaminodicyclohexylmethan, 2,2-(4,4'-Diaminodicyclohexyl)propan oder 3,3'-Dimethyl-4,4'-Diaminodicyclohexylmethan als Vertreter der Diamine und Capryllactam, Önanthlactam, ω-Aminoundecansäure und Laurinlactam als Vertreter von Lactamen bzw. Aminocarbonsäuren genannt.

Hierbei sind folgende Zusammensetzungen der Komponente (A) besonders bevorzugt:

$A_1$) 65 bis 85 Gew.-% Einheiten, die sich von Terephthalsäure und Hexamethylendiamin ableiten und

$A_4$) 15 bis 35 Gew.-% Einheiten, die sich von Isophthalsäure und Hexamethylendiamin ableiten
oder

$A_1$) 50 bis 70 Gew.-% Einheiten, die sich von Terephthalsäure und Hexamethylendiamin ableiten und

$A_3$) 10 bis 20 Gew.-% Einheiten, die sich von Adipinsäure und Hexamethylendiamin ableiten und

$A_4$) 20 bis 30 Gew.-% Einheiten, die sich von Isophthalsäure und Hexamethylendiamin ableiten.

Enthält die Komponente ($A_4$) symmetrische Dicarbonsäuren, bei denen die Carboxylgruppen in para-Stellung stehen, so empfiehlt es sich, diese mit ($A_1$) und ($A_2$) oder ($A_1$) und ($A_3$) als ternäre Copolyamide aufzubauen, da andernfalls das Copolyamid einen zu hohen Schmelzpunkt aufweist und nur unter Zersetzung schmilzt, was nicht wünschenswert ist.

Weiterhin haben sich solche teilaromatischen Copolyamide als besonders vorteilhaft erwiesen, deren Triamingehalt weniger als 0,5, vorzugsweise weniger als 0,3 Gew.-% beträgt.

Nach den meisten bekannten Verfahren (vgl. US-A 4 603 166) hergestellte teilaromatische Copolyamide weisen Triamingehalte auf, die über 0,5 Gew.-% liegen, was zu einer Verschlechterung der Produktqualität und zu Problemen bei der kontinuierlichen Herstellung führt. Als Triamin, welches diese Probleme verursacht, ist insbesondere das Dihexamethylentriamin zu nennen, welches sich aus dem bei der Herstellung eingesetzten Hexamethylendiamin bildet.

Copolyamide mit niedrigem Triamingehalt weisen bei gleicher Lösungsviskosität niedrigere Schmelzviskositäten im Vergleich zu Produkten gleicher Zusammensetzung auf, die einen höheren Triamingehalt aufweisen. Dies verbessert sowohl die Verarbeitbarkeit als auch die Produkteigenschaften erheblich.

Die Schmelzpunkte der teilaromatischen Copolyamide liegen im Bereich von 270 bis 325°C, bevorzugt von 280 bis 310°C, wobei dieser hohe Schmelzpunkt auch mit einer hohen Glasübergangstemperatur von in der Regel mehr als 75, insbesondere mehr als 85°C (im trockenen Zustand) verbunden ist.

Binäre Copolyamide auf der Basis von Terephthalsäure, Hexamethylendiamin und ε-Caprolactam weisen bei Gehalten von etwa 70 Gew.-% an Einheiten, die sich von Terephthalsäure und Hexamethylendiamin ableiten, Schmelzpunkte im Bereich von 300°C und (im trockenen Zustand) eine Glasübergangstemperatur von mehr als 110°C auf.

Binäre Copolyamide auf der Basis von Terephthalsäure, Adipinsäure und Hexamethylendiamin erreichen bereits bei niedrigeren Gehalten von etwa 55 Gew.-% Einheiten aus Terephthalsaure und Hexamethylendiamin (HMD) Schmelzpunkte von 300oC und mehr, wobei die Glastemperatur nicht ganz so hoch liegt wie bei binären Copolyamiden, die anstelle von Adipinsäure bzw. Adipinsäure/HMD ε-Caprolactam enthalten.

Die Herstellung der bevorzugten teilaromatischen Copolyamide mit niedrigem Triamingehalt kann nach den in den EP-A 129 195 und 129 196 beschriebenen Verfahren erfolgen.

Die erfindungsgemäßen Formmassen enthalten als Komponente (B) 1 bis 30 Gew.-%, bevorzugt 1 bis 15 und insbesondere 3 bis 10 Gew.% roten Phosphor, insbesondere in Kombination mit glasfaserverstärkten Formmassen, der in unbehandelter Form eingesetzt werden kann.

Besonders eignen sich jedoch Zubereitungen, in denen der Phosphor oberflächlich mit niedermolekularen flüssigen Substanzen wie Silikonöl, Paraffinöl oder Estern der Phthalsäure oder Adipinsäure oder mit polymeren oder oligomeren Verbindungen, z.B. mit Phenolharzen oder Aminoplasten sowie Polyurethanen beschichtet ist.

Außerdem sind Konzentrate von rotem Phosphor, z.B. in einem Polyamid oder Elastomeren als Flammschutzmittel geeignet. Insbesondere eignen sich Polyolefinhomo- und -copolymere als Konzentratpolymere. Jedoch sollte der Anteil des Konzentratpolymeren nicht mehr als 35 Gew.% bezogen auf das Gewicht der Komponenten (A) und (B) in der erfindungsgemäßen Formmasse betragen.

Die mittlere Teilchengröße ($d_{50}$) der in den Formmassen verteilten Phosphorpartikel liegt bevorzugt im Bereich von 0,0001 bis 0,5 mm; insbesondere von 0,001 bis 0,2 mm.

Der Gehalt der Komponente B) in den erfindungsgemäßen Formmassen ist bezogen auf die Summe der Komponenten A) bis G).

Als Komponente C) enthalten die erfindungsgemäßen Formmassen 0,1 bis 5, vorzugsweise 0,4 bis 3 und insbesondere 0,5 bis 1,5 Gew.-% eines komplementärfarbigen grün-, blau- oder violettfarbigen Pigmentes oder deren Mischungen.

Da der rote Phosphor eine gelbe bis tiefrote Färbung in den thermoplastischen Formmassen aufweist, werden entsprechend als komplementärfarbige Pigmente C) grüne, blaue oder violette Pigmente oder deren Mischungen verwendet, um wie es gewünscht wird, eine schwarze Farbe der Formmassen zu erzielen.

Pigmente gehören sowohl zu den organischen als auch zu den anorganischen Farbmitteln und unterscheiden sich von Farbstoffen insofern, daß Pigmente in Lösungs- und/oder Bindemitteln unlösliche Farbstoffe sind. Diese werden im allgemeinen gemäß dem Colour Index (C.I.) klassifiziert, wobei zusätzlich zu systematischen oder Trivialnamen eine eindeutige Zuordnung ermöglichende C.I. Bezeichnung hinzugefügt wird.

Als bevorzugte Pigmente seien Kupferphthalocyaninpigmente genannt, welche eine grüne oder blaue Farbe aufweisen. Die grüne Farbe wird im allgemeinen durch Substitution von Wasserstoff durch Chloratome am macrocyclischen Tetraamin erzielt.

Weitere geeignete Pigmente sind Manganviolettpigmente (Pyrophosphate aus Ammonium und Mangan (III) der Formel $MnNH_4P_2O_7$, welche durch Variation der stöchiometrischen Zusammensetzung blauere oder rötere Töne ergeben), Ultramarin-Pigmente (Natrium-, Aluminiumsilikate), Blau und Grünpigmente auf der Basis von z.B. Chromoxiden oder Kobaltoxiden mit Spinellstruktur. Derartige Pigmente sind unter den Handelsnamen Heliogen®-blau, Heliogen®grün, Sicopal®-grün, Sicopal®-blau (eingetragene Warenzeichen der BASF AG) sowie als Ultramarin-, Chromoxid- oder Manganviolett-Pigmente im Handel erhältlich.

Bevorzugte Pigmente sind gemäß C.I. Teil 1 Pigment Blue 15, Pigment Blue 15:2, Pigment Blue 15:4, Pigment Blue 16, Pigment Blue 28, Pigment Blue 29, Pigment Blue 36, Pigment Green 17, Pigment Green 24, Pigment Green 50, Pigment Violet 15 und Pigment Violet 16, wobei Pigment Blue 15:1 und 15:3 sowie Pigment Green 7 und 36 besonders bevorzugt sind.

Die Pigmente weisen im allgemeinen einen mittleren Teilchendurchmesser von 0,3 bis 8 μm bevorzugt von 0,7 bis 7 μm auf.

Als Komponente (D) können die erfindungsgemäßen thermoplastischen Formmassen 0 bis 30, vorzugsweise 5 bis 20 und insbesondere 5 bis 15 Gew.-% eines kautschukelastischen Polymerisats enthalten. Bevorzugte kautschukelastische Polymerisate sind Polymerisate auf Basis von Olefinen, die aus folgenden Komponenten aufgebaut sind:

$d_1$) 40-100 Gew.-% mindestens eines α-Olefins mit 2-8 C-Atomen

$d_2$) 0-50 Gew.-% eines Diens

$d_3$) 0-45 Gew.-% eines $C_1$-$C_{12}$-Alkylesters der Acrylsäure oder Methacrylsaure oder Mischungen derartiger Ester,

$d_4$) 0-40 Gew.-% einer ethylenisch ungesättigen Mono- oder Dicarbonsäure oder einem funktionellen Derivat einer solchen Säure

$d_5$) 0-40 Gew.-% eines Epoxygruppen enthaltenden Monomeren,

$d_6$) 0-5 Gew.-% sonstiger radikalisch polymerisierbaren Monomerer,
mit der Maßgabe, daß die Komponente (D) kein Olefinhomopolymerisat ist.

Als erste bevorzugte Gruppe sind die sogenannten Ethylen-Propylen-(EPM)- bzw. Ethylen-Propylen-Dien-(EPDM)-Kautschuke zu nennen, die vorzugsweise ein Verhältnis von Ethylen- zu Propyleneinheiten im Bereich von 40:60 bis 90:10 aufweisen.

Die Mooney-Viskositäten (MLI+4/100°C) solcher, vorzugsweise unvernetzter, EPM- bzw. EPDM-Kautschuke (Gelgehalte im allgemeinen unter 1 Gew.-%) liegen bevorzugt im Bereich von 25 bis 100, insbesondere von 35 bis 90 (gemessen am großen Rotor nach 4 Minuten Laufzeit bei 100°C nach DIN 53 523).

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere $d_2$) für EPDM-Kautschuke seien beispielsweise konjugiert Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyc10(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 2 bis 20 und besonders bevorzugt 3 bis 15 Gew.-%, bezogen auf das Gesamtgewicht des Olefinpolymerisats.

EPM- bzw. EPDM-Kautschuke können vorzugsweise auch mit reaktiven Carbonsäuren oder deren Derivaten gepfropft sein. Hier seien vor allem Acrylsäure, Methacrylsäure und deren Derivate sowie Maleinsäureanhydrid genannt.

Eine weitere Gruppe bevorzugter Olefinpolymerisate sind Copolymere von a-Olefinen mit 2-8 C-Atomen, insbesondere des Ethylens, mit $C_1$-$C_{18}$-Alkylestern der Acrylsäure und/oder Methacrylsäure.

Grundsätzlich eignen sich alle primären und sekundären $C_1$-$C_{18}$-Alkylester der Acrylsäure oder Methacrylsäure, doch werden Ester mit 1-12 C-Atomen, insbesondere mit 2-10 C-Atomen bevorzugt.

Beispiele hierfür sind Methyl-, Ethyl-, Propyl-, n-, i-Butyl- und 2-Ethylhexyl-, Octyl- und Decylacrylate bzw. die entsprechenden Ester der Methacrylsäure. Von diesen werden n-Butylacrylat und 2-Ethylhexylacrylat besonders bevorzugt.

Der Anteil der Methacrylsäureester und Acrylsäureester $d_3$) an den Olefinpolymerisaten beträgt 0-60, vorzugsweise 10-50 und insbesondere 30-45 Gew.-%.

Anstelle der Ester $d_3$) oder zusätzlich zu diesen können in den Olefinpolymerisaten auch säurefunktionelle und/oder latent säurefunktionelle Monomere ethylenisch ungesättigter Mono- oder Dicarbonsäuren $d_4$) oder Epoxygruppen aufweisende Monomere $d_5$) enthalten sein.

Als Beispiele für Monomere $d_4$) seien Acrylsäure, Methacrylsäure, tertiäre Alkylester dieser Säuren, insbesondere tert.-Butylacrylat und Dicarbonsäuren wie Maleinsäure und Fumarsäure oder Derivate dieser Säuren sowie deren Monoester genannt.

Als latent säurefunktionelle Monomere sollen solche Verbindungen verstanden werden, die unter den Polymerisationsbedingungen bzw. bei der Einarbeitung der Olefinpolymerisate in die Formmassen freie Säuregruppen bilden. Als Beispiele hierfür seien Anhydride von Dicarbonsäuren mit bis zu 20 C-Atomen, insbesondere Maleinsäureanhydrid und tertiäre $C_1$-$C_{12}$-Alkylester der vorstehend genannten Säuren, insbesondere tert.-Butylacrylat und tert.-Butylmethacrylat angeführt.

Die säurefunktionellen bzw. latent säurefunktionellen Monomeren und die Epoxygruppen-enthaltenden Monomeren werden vorzugsweise durch Zugabe von Verbindungen der allgemeinen Formeln I-IV zum Monomerengemisch in die Olefinpolymerisate eingebaut.

$$R^1C(COOR^2)=C(COOR^3)R^4 \qquad (I)$$

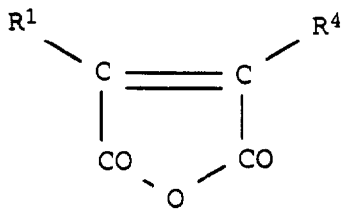

(II)

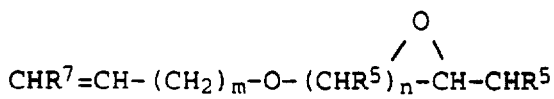

(III)

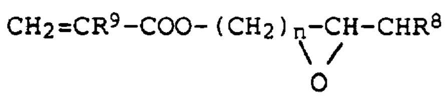

(IV)

wobei die Reste $R^1$ - $R^9$ Wasserstoff oder Alkylgruppen mit 1 bis 6 C-Atomen darstellen und m eine ganze Zahl von 0 bis 20 und n eine ganze Zahl von 0 bis 10 ist.

Bevorzugt für R1 - R7 ist Wasserstoff, für m der Wert 0 oder 1 und für n der Wert 1. Die entsprechenden Verbindungen sind Maleinsäure, Fumarsäure, Maleinsäureanhydrid, $d_4$) bzw. Alkenylglycidylether oder Vinylglycidylether $d_5$).

Bevorzugte Verbindungen der Formeln I, II, III und IV sind Maleinsäure und Maleinsäureanhydrid als Komponente $d_4$) und Epoxygruppen-enthaltende Ester der Acrylsäure und/oder Methacrylsäure, wobei Glycidylacrylat und Glycidylmethacrylat (als Komponente $d_5$) besonders bevorzugt werden.

Der Anteil der Komponenten $d_4$) bzw. $d_5$) beträgt jeweils 0,07 bis 40 Gew.-%, insbesondere 0,1 bis 20 und besonders bevorzugt 0,15 bis 15 Gew.-%, bezogen auf das Gesamtgewicht der Olefinpolymerisate.

Besonders bevorzugt sind Olefinpolymerisate aus

| | |
|---|---|
| 50 bis 98,9 | insbesondere 60 bis 95 Gew.% Ethylen, |
| 0,1 bis 20, | insbesondere 0,15 bis 15 Gew.% Glycidylacrylat und/oder Glycidylmethacrylat, Acrylsäure und/oder Maleinsäureanhydrid, |
| 1 bis 45, | insbesondere 10 bis 35 Gew.% n-Butylacrylat und/oder 2-Ethylhexylacrylat. |

Weitere bevorzugte Ester der Acryl- und/oder Methacrylsäure sind die Methyl-, Ethyl-, Propyl- und i-Butylester.

Als sonstige Monomere $d_6$) kommen z.B. Vinylester und Vinylether in Betracht.

Die Herstellung der vorstehend beschriebenen Ethylencopolymeren kann nach an sich bekannten Verfahren erfolgen, vorzugsweise durch statistische Copolymerisation unter hohem Druck und erhöhter Temperatur.

Der Schmelzindex der Ethylencopolymeren liegt im allgemeinen im Bereich von 1 bis 80 g/10 min (gemessen bei 190°C und 2,16 kg Belastung).

Außer den vorstehenden bevorzugten kautschukelastischen Polymerisaten auf Basis von Olefinen eignen sich

als Elastomere (D) beispielsweise Emulsionspolymerisate, deren Herstellung z.B. in Houben-Weyl, Methoden der organischen Chemie, Band XII. I (1961) sowie bei Blackley in der Monographie "Emulsion Polymerisation" beschrieben wird.

Grundsätzlich können statistisch aufgebaute Elastomere oder aber solche mit einem Schalenaufbau eingesetzt werden. Der schalenartige Aufbau wird durch die Zugabereihenfolge der einzelnen Monomeren bestimmt.

Als Monomere für die Herstellung der Elastomeren seien Acrylate wie n-Butylacrylat und 2-Ethylhexylacrylat, entsprechende Methacrylate, sowie deren Mischungen genannt. Diese Monomeren können mit weiteren Monomeren wie Styrol, Acrylnitril, Vinylethern und weiteren Acrylaten oder Methacrylaten wie Methylmethacrylat, Methylacrylat, Ethylacrylat und Propylacrylat copolymerisiert werden.

Vorteilhaft ist die Verwendung von Emulsionspolymerisaten, die an der Oberfläche reaktive Gruppen aufweisen. Derartige Gruppen sind z.B. Epoxy-, Carboxyl-, latente Carboxyl-, Amino- oder Amidgruppen.

Auch die in der EP-A 208 187 beschriebenen Pfropfmonomeren sind zur Einführung reaktiver Gruppen an der Oberfläche geeignet.

Weiterhin können die Emulsionspolymerisate ganz oder teilweise vernetzt sein. Als Vernetzer wirkende Monomere sind beispielsweise Buta-1,3-dien, Divinylbenzol, Diallylphthalat und Dihydrodicyclopentadienylacrylat sowie die in der EP-A 50 265 beschriebenen Verbindungen.

Ferner können pfropfvernetzende Monomere verwendet werden, d.h. Monomere mit zwei oder mehr polymerisierbaren Doppelbindungen, die bei der Polymerisation mit unterschiedlichen Geschwindigkeiten reagieren.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomerer; für nähere Einzelheiten sei hier beispielsweise auf die US-PS 4 148 846 verwiesen.

Im allgemeinen beträgt der Anteil dieser vernetzenden Monomeren an der Komponente (D) bis zu 5 Gew.%, vorzugsweise nicht mehr als 3 Gew.%, bezogen auf (D).

Beispiele für bevorzugte Emulsionspolymerisate sind n-Butylacrylat/(Meth)acrylsäure-Copolymere, n-Butylacrylat/Glycidylacrylat- oder n-Butylacrylat/Glycidylmethacrylat-Copolymere und Pfropfpolymerisate mit einem inneren Kern aus n-Butylacrylat und einer äußeren Hülle aus den vorstehend genannten Copolymeren.

Die beschriebenen Elastomere (D) können auch nach anderen üblichen Verfahren, z.B. durch Suspensionspolymerisation, hergestellt werden.

Als weiteren Bestandteil können die erfindungsgemäßen thermoplastischen Formmassen 0 bis 50, vorzugsweise 10 bis 35, insbesondere 15 bis 35 Gew.% eines faser- oder teilchenförmigen Füllstoffes (Komponente (E)) oder deren Mischungen enthalten.

Bevorzugte faserförmige Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem thermoplastischen Polyamid (A) mit einer Schlichte und einem Haftvermittler ausgerüstet sein. Im allgemeinen haben die verwendeten Glasfasern einen Durchmesser im Bereich von 6 bis 20 mm.

Die Einarbeitung dieser Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Als teilchenförmige Füllstoffe eignen sich amorphe Kieselsäure, Magnesiumcarbonat (Kreide), Kaolin (insbesondere kalzinierter Kaolin), gepulverter Quarz, Glimmer, Talkum, Feldspat und insbesondere Calciumsilikate wie Wollastonit.

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

Als Komponente F) können die erfindungsgemäßen Formmassen bis 70, bevorzugt bis 65 und insbesondere bis 50 Gew.-% eines Polyphenylenethers enthalten, welcher gegebenenfalls bis zu 50 Gew.-%, vorzugsweise bis zu 40 Gew.-%, bezogen auf F) durch ein vinylaromatisches Polymer ersetzt sein kann.

Die Polyphenylenether weisen im allgemeinen ein Molekulargewicht (Gewichtsmittelwert) im Bereich von 10 000 bis 80 000, vorzugsweise von 20 000 bis 60 000 auf.

Dies entspricht einer reduzierten spezifischen Viskosität ($\eta_{red}$) von 0,2 bis 0,9 dl/g, vorzugsweise von 0,35 bis 0,8 und insbesondere 0,45 bis 0,6, gemessen in einer 0,5 gew.%-igen Lösung in Chloroform bei 25'C nach DIN 53 726.

Geeignete Polyphenylenether $f_1$) sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu

4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d. h. ganz oder weitestgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Beispiele für Polyphenylenether sind Poly(2,6-dilauryl-1,4-phenylenether), Poly(2,6-diphenyl-1,4-phenylenether), Poly(2,6-dimethoxi-1,4-phenylenether), Poly(2,6-diethoxi-1,4-phenylenether), Poly(2-methoxi-6-ethoxi-1,4-phenylenether), Poly(2-ethyl-6-stearyloxi-1,4-phenylenether), Poly(2,6-di-chlor-1,4-phenylenether), Poly(2-methyl-6-phenyl-1,4-phenylenether, Poly-12,6-dibenzyl-1,4-phenylen)ether, Poly(2-ethoxi-1,4-phenylenether), Poly-(2-chlor-1,4-phenylenether), Poly(2,5-dibrom-1,4-phenylenether). Bevorzugt werden Polyphenylenether eingesetzt, bei denen die Substituenten Alkylreste mit 1 bis 4 Kohlenstoffatomen sind, wie Poly(2,6-dimethyl-1,4-phenylenether), Poly(2,6-diethyl-1,4-phenylenether), Poly(2-methyl-6-ethyl-1,4-phenylenether), Poly(2-methyl-6-propyl-1,4-phenylenether), Poly (2,6-di-propyl-1,4-phenylenether) und Poly(2-ethyl-6-propyl-1,4-phenylenether).

Weiterhin sind Pfropfcopolymere aus Polyphenylenether und vinylaromatischen Polymeren wie Styrol, a-Methylstyrol, Vinyltoluol und Chlorstyrol geeignet.

Bevorzugt werden funktionalisierte oder modifizierte Polyphenylenether eingesetzt, wie sie z.B. aus WO-A 86/02086, WO-A 87/00540, EP-A-222 246, EP-A-223 116 und EP-A-254 048 bekannt sind.

Üblicherweise wird bei deren Herstellung ein Polyphenylenether $f_1$) durch Einbau mindestens einer Carbonyl-, Carbonsäure-, Säureanhydrid-, Säureamid-, Säureimid, Carbonsäureester-, Carboxylat-, Amino-, Hydroxyl-, Epoxi-, Oxazolin-, Urethan-, Harnstoff-, Lactam- oder Halogenbenzylgruppe modifiziert, so daß eine bessere Verträglichkeit mit dem Polyamid erreicht wird.

Die Modifizierung wird im allgemeinen durch Umsetzung eines Polyphenylenethers $f_1$) mit einem Modifiziermittel, das mindestens eine der oben genannten Gruppen enthält, in Lösung (WO-A 86/2086), in wäßriger Dispersion, in einem Gasphasenverfahren (EP-A-25 200) oder in der Schmelze gegebenenfalls in Gegenwart von geeigneten vinylaromatischen Polymeren oder Schlagzähmodifiern durchgeführt, wobei wahlweise Radikalstarter zugegen sein können.

Bevorzugt wird in den erfindungsgemäßen Formmassen als Komponente f) ein modifizierter Polyphenylenether eingesetzt, der durch Umsetzung von

$f_1$) 70 - 99,95, vorzugsweise 75 - 95 Gew.-%, eines unmodifizierten Polyphenylenethers,

$f_2$) 0 - 29,95, vorzugsweise 4,89 - 20 Gew.-%, eines vinylaromatischen Polymeren,

$f_3$) 0,05 - 30, vorzugsweise 0,1 - 5 Gew.-%, mindestens einer Verbindung aus der Gruppe gebildet aus

- $f_{31}$) $\alpha,\beta$-ungesättigten Dicarbonylverbindungen,
- $f_{32}$) Amid-Gruppen enthaltenden Monomeren mit einer polymerisierbaren Doppelbindung und
- $f_{33}$) Lactam-Gruppen enthaltenden Monomeren mit einer polymerisierbaren Doppelbindung,

$f_4$) 0 - 5, vorzugsweise 0,01 - 0,09 Gew.-%, eines Radikalstarters

wobei sich die Gewichtsprozente auf die Summe von $f_1$) bis $f_4$) beziehen, in geeigneten Misch- und Knetaggregaten wie Zweischnekkenextrudern erhältlich ist. Die Verweilzeit liegt dabei vorzugsweise im Bereich von 0,5 bis 15 Minuten bei Temperaturen von 240 bis 375°C.

Das vinylaromatische Polymer $f_2$) ist vorzugsweise mit dem eingesetzten Polyphenylenether verträglich.

Das Molekulargewicht dieser an sich bekannten und im Handel erhältlichen Polymeren liegt im allgemeinen im Bereich von 1500 bis 2 000 000, vorzugsweise im Bereich von 70 000 bis 1 000 000.

Beispiele für bevorzugte, mit Polyphenylenethern verträgliche vinylaromatische Polymere $f_2$) sind der bereits erwähnten Monographie von Olabisi, S. 224 bis 230 und 245 zu entnehmen. Nur stellvertretend seien hier vinylaromatische Polymere aus Styrol, Chlorstyrol, a-Methylstyrol und p-Methylstyrol genannt; in untergeordneten Anteilen (vorzugsweise nicht mehr als 20, insbesondere nicht mehr als 8 Gew.-%), können auch Comonomere wie (Meth)acrylnitril oder (Meth)acrylsäureester am Aufbau beteiligt sein. Besonders bevorzugte vinylaromatische Polymere sind Polystyrol und schlagzäh modifiziertes Polystyrol. Es versteht sich, daß auch Mischungen dieser Polymeren eingesetzt werden können. Die Herstellung erfolgt vorzugsweise nach dem in der EP-A-302 485 beschriebenen Verfahren.

Geeignete Modifiziermittel $f_3$) sind beispielsweise Maleinsäure, Methylmaleinsäure, Itaconsäure, Tetrahydrophthalsäure, deren Anhydride und Imide, Fumarsäure, die Mono- und Diester dieser Säuren, z.B. von C1- und $C_2$-$C_8$-Alkanolen (Monomere $f_{31}$), die Mono- oder Diamide dieser Säuren wie N-Phenylmaleinimid (Monomere $f_{32}$) und Maleinhydrazid. Andere geeignete Modifizierungsmittel sind das Säurechlorid des Trimelithsäureanhydrids, Benzol-1,2-dicarbonsäureanhydrid-4-carbonsäure-essigsäureanhydrid, Chlorethanoylsuccinaldehyd, Chlorformylsuccinaldehyd, Zitronensäure und Hydroxysuccinsäure. Als Monomere $f_{33}$) seien beispielsweise N-Vinylpyrrolidon und (Meth)acryloylcaprolactam genannt.

Als Radikalstarter $f_4$) seien genannt:
Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Ditert.-butylperoxybutan, Dicumylperoxid, tert.-Butylcumylperoxid, 1,3-Di(tert.-butylperoxyisopropyl) benzol und Di-tert.-butylperoxid. Genannt seien ebenfalls organische Hydroperoxide wie Di-isopropylbenzolmonohydroperoxid, Cumolhydroperoxid, tert.- Butylhydroperoxid, p-Menthylhydroperoxid und Pinanhydroperoxid sowie hochverzweigte Alkane der allgemeinen Struktur

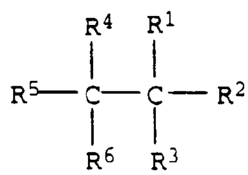

wobei $R^1$ bis $R^6$ Alkylgruppen mit 1 - 8 C-Atomen, Alkoxygruppen mit 1 - 8 C-Atomen, Arylgruppen wie Phenyl, Naphthyl oder 5- oder 6-gliedrige Heterocyclen mit einem p-Elektronensystem und Stickstoff, Sauerstoff oder Schwefel als Heteroatomen darstellen. Die Substituenten R1 bis R6 können ihrerseits funktionelle Gruppen als Substituenten enthalten, wie Carboxyl-, Carboxylderivat-, Hydroxyl-, Amino-, Thiol- oder Epoxidgruppen. Beispiele sind 2,3-Dimethyl-2,3-diphenylbutan, 3,4-Dimethyl-3,4-diphenylhexan und 2,2,3,3-Tetraphenylbutan.

Neben den wesentlichen Komponenten A) bis C) sowie gegebenenfalls D) bis F) können die erfindungsgemäßen Formmassen übliche Zusatzstoffe und Verarbeitungshilfsmittel G) enthalten. Deren Anteil beträgt im allgemeinen bis zu 30, vorzugsweise bis zu 15 Gew.%, bezogen auf das Gesamtgewicht der Komponenten (A) bis (G), wobei zusätzliche Pigmente und Farbstoffe, verschieden von C), in Mengen bis zu 1 gew% enthalten sind.

Ubliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher.

Zusätzliche Pigmente und Farbstoffe sind allgemein in Mengen bis zu 1, bevorzugt bis 0,6 und insbesondere bis 0,4 Gew.-% enthalten. Derartige Pigmente führen zu einer Farbvertiefung oder zu unterschiedlichen matten Abstufungen der schwarzen Farbe und sind allgemein bekannt, siehe z.B. R. Gächter und H. Müller, Taschenbuch der Kunststoffadditive, Carl Hanser Verlag, 1983, S. 494 bis 510. Als erste bevorzugte Gruppe von Pigmenten sind Weißpigmente zu nennen wie Zinkoxid, Zinksulfid, Bleiweiß (2 $PbCO_3 \cdot Pb(OH)_2$), Lithopone, Antimonweiß und Titandioxid. Von den beiden gebräuchlichsten Kristallmodifikationen (Rutil- und Anatas-Typ) des Titandioxids wird insbesondere die Rutilform zur Nuancierung der erfindungsgemäßen Formmassen verwendet.

Schwarze Farbpigmente, die erfindungsgemäß eingesetzt werden können, sind Eisenoxidschwarz ($Fe_3O_4$), Spinellschwarz ($Cu,(Cr,Fe)_2O_4$), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-Verlag (1988), S. 78ff).

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer Kupfer-(I)-Halogeniden, z.B. Chloriden, Bromiden oder Iodiden. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.% eingesetzt werden.

Gleit- und Entformungsmittel, die in der Regel in Mengen bis zu 1 Gew.% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Unter den Zusatzstoffen sind auch Stabilisatoren, die die Zersetzung des roten Phosphors in Gegenwart von Feuchtigkeit und Luftsauerstoff verhindern. Als Beispiele seien Verbindungen des Cadmiums, Zinks, Aluminiums, Zinns, Magnesiums, Mangans und Titans genannt. Besonders geeignete Verbindungen sind z.B. Oxide der genannten Metalle, ferner Carbonate oder Oxicarbonate, Hydroxide sowie Salze organischer oder anorganischer Säuren wie Acetate oder Phosphate bzw. Hydrogenphosphate.

Die erfindungsgemäßen thermoplastischen Formmassen können nach an sich bekannten Verfahren hergestellt werden, indem man die Ausgangskomponenten in üblichen Mischvorrichtungen wie Schneckenextrudern, Brabendermühlen oder Banbury-Mühlen mischt und anschließend extrudiert. Nach der Extrusion wird das Extrudat abgekühlt und zerkleinert.

Die erfindungsgemäßen Formmassen zeichnen sich durch eine gute Lichtechtheit sowie gute Flammschutzeigenschaften, insbesondere Phosphorstabilität und elektrische Eigenschaften, insbesondere Kriechstromfestigkeit aus.

Deshalb eignen sie sich zur Herstellung von Fasern, Folien und Formkörpern, welche insbesondere in der Elektroindustrie als z.B. Schalterteile, Spulenkörper, Schalt-Schütze, etc. Anwendung finden.

Beispiele

Es wurden folgende Komponenten eingesetzt:

Komponente A

Polyamid-6.6 (Polyhexamethylenadipinsäureamid) mit einer Viskositätszahl von 151 ml/g, entsprechend einer relativen Viskosität $\eta_{rel}$ von 2,7 (gemessen in 96 gew.-%iger $H_2SO_4$ als 0,5 gew.-%ige Lösung bei 25°C nach ISO 307).

Komponente B

Roter Phosphor der mittleren Teilchengröße ($d_{50}$) von 45 µm.

Komponente C/1

Cu-Phthalocyanin-Pigment, Pigment Blue 15:3 oder C.I. 74160 (Teil 2) (Heliogen®-Blau K 7090 der BASF AG)

Komponente C/2

Cu-Phthalocyanin Pigment; Pigment Green 7 oder C.I. 74260 (Teil 2) (Heliogen®-Grün K 8730 der BASF AG)

Komponente C/1V

Nigrosinbase SAPL der Firma Orient Chem. Ltd., JP
(Nigrosin ≙ Kondensationsprodukt aus Nitrobenzol und Anilin mit $FeCl_3$ als Katalysator)

Komponente D

Ein Olefinpolymerisat aus

60 Gew.-% Ethylen
35 Gew.% n-Butylacrylat
4,3 Gew.-% Acrylsäure
0,7 Gew.-% Maleinsäureanhydrid

mit einem MFI von 10 g/10 min bei 190°C und 1,16 kg Belastung.

Komponente E

Glasfasern mit einem mittleren Durchmesser von 10 µm.

Komponente F/1

Zinkoxid.

Komponente F/2

Furnace Ruß mit einer Dibutylphthalat-Adsorption (DBP-Adsorption) nach DIN 53601 von 105 $cm^3$/100 g und einer Primärteilchengröße von 16 nm. (Black Pearls® 880 der Fa. Cabot Corp.)

Herstellung der Formmassen

Die Komponenten A) bis F) wurden auf einen Zweischneckenextruder (120 U/min; 30 kg/h) bei 280°C konfektioniert, verstrangt und im Wasserbad gekühlt sowie granuliert. Das Granulat wurde bei 80°C im Vakuum getrocknet und bei 280°C zu Normprüfkörpern auf einer Spritzgußmaschine verarbeitet.

Zur Messung der Phosphorstabilitaten wurden Prüfkörper (6 x 4,5 x 0,2 cm), welche jeweils in 5 gleiche Streifen geteilt wurden, bei 100 % rel. Feuchtigkeit bei 70°C belassen, wobei nach 14 Tagen eine Probeentnahme zur Bestimmung der wasserlöslichen Phosphorverbindungen mittels AAS erfolgte.

Die Bestimmung der Kriechstromfestigkeit (CTI) erfolgte nach DIN 112, ASTM-D 3638.

Farbmessungen gemäß DIN 5033:

$\Delta E \triangleq$ Gesamtfarbabstand gemäß DIN 6174
$\Delta L \triangleq$ Abweichung in Hell-Dunkel Richtung
$\Delta a \triangleq$ Rot-Grün-Abweichung
$\Delta b \triangleq$ Blau-Gelb-Abweichung

Das Vorzeichen +/- definiert die Abweichung gegenüber dem Standard bzw. Bezugspunkt; in diesem Fall diente als Bezugspunkt Vergleichsbeispiel 6 mit Nigrosin als Schwarzfarbstoff.

$\Delta L$ + heller
- dunkler

$\Delta a$ + roter
- grüner

$\Delta b$ + gelber
- blauer

Der Gesamtfarbabstand $\Delta E$ berechnet sich wie folgt:

$$\Delta E = \sqrt{\Delta L^2 + \Delta a^2 + \Delta b^2}$$

Meßgerät: Datacolor DC 3890
Meßgeometrie: d/8° (diffus)
Meßbedingungen: incl. Glanz
Lichtart: D 65 (Tageslicht)

Die Zusammensetzung der Formmassen und die Ergebnisse der Messungen sind der Tabelle zu entnehmen.

Tabelle 1

| Beispiel | Zusammensetzung [Gew.-%] | | | | | | |
|---|---|---|---|---|---|---|---|
| 1 | 61,8 A | 6 B | 0,5 C/1 | 6 D | 25 E | 0,7 F/1 | |
| 2 | 61,3 A | 6 B | 1,0 C/1 | 6 D | 25 E | 0,7 F/1 | |
| 3 | 61,1 A | 6 B | 1,0 C/1 | 6 D | 25 E | 0,7 F/1 | 0,2 F/2 |
| 4 | 59,9 A | 6 B | 1,0 C/1 | 6 D | 25 E | 0,7 F/1 | 0,4 F/2 |
| 5 | 61,3 A | 6 B | 1,0 C/2 | 6 D | 25 E | 0,7 F/1 | |
| 6 | 60,3 A | 6 B | 2,0 C/1V | 6 D | 25 E | 0,7 F/1 | |
| 7*) | 62,3 A | 6 B | - | 6 D | 25 E | 0,7 F/1 | |
| 8*) | 60,3 A | 6 B | - | 6 D | 25 E | 0,7 F/1 | 2 F/2 |

*) zum Vergleich

Tabelle 2

| Beispiel | P-Schädigungsrate | CTI | Farbmessungen | | | |
|---|---|---|---|---|---|---|
| | [ppm] nach 14 Tagen | [Volt] | ΔE | ΔL | Δa | Δb |
| 1 | 3 | 600 | 3,1 | 3,0 | 0,6 | 0,3 |
| 2 | 6 | 600 | 2,3 | 2,3 | - 0,4 | 0,2 |
| 3 | 4 | 550 | 1,5 | 1,4 | 0,2 | 0,6 |
| 4 | 3 | 500 | 1,1 | 0,9 | 0,3 | 0,6 |
| 5 | 3 | 600 | 2,3 | 2,2 | - 0,5 | 0,3 |
| 6*) | 70 | 600 | Bezugspunkt | | | |
| 7*) | 2 | 600 | - | - | - | - |
| 8*) | 4 | 300 | 0,4 | 0,3 | 0,2 | 0,2 |

*) zum Vergleich

## Patentansprüche

**1.** Flammgeschützte schwarze thermoplastische Formmassen, enthaltend

A) 5 bis 98,9 Gew.-% eines thermoplastischen Polyamids

B) 1 bis 20 Gew.-% roter Phosphor

C) 0,1 bis 5 Gew.-% eines komplementärfarbigen grün-, blau- oder violettfarbigen Pigmentes oder deren Mischungen

D) 0 bis 30 Gew.-% eines kautschukelastischen Polymerisates

E) 0 bis 50 Gew.-% eines faser- oder teilchenförmigen Füllstoffes oder deren Mischungen

F) 0 bis 70 Gew.-% eines Polyphenylenethers

G) 0 bis 30 Gew.-% übliche Zusatzstoffe und Verarbeitungshilfsmittel, wobei zusätzliche Pigmente und Farbstoffe, verschieden von C), in Mengen bis zu 1gew% enthalten sind,

wobei die Gewichtsprozente der Komponenten A bis G jeweils 100 % ergeben.

**2.** Flammgeschützte schwarze thermoplastische Formmassen nach Anspruch 1, in denen die Komponente C) ein Kupferphthalocyaninpigment ist.

**3.** Flammgeschützte schwarze thermoplastische Formmassen nach den Ansprüchen 1 oder 2, in denen die Komponente C) aus einem Manganviolett- oder Ultramarinpigment oder deren Mischungen besteht.

**4.** Flammgeschützte schwarze thermoplastische Formmassen nach den Ansprüchen 1 bis 3, in denen die Komponente C) aus Pigmenten auf Basis von Chromoxiden oder Cobaltoxiden aufgebaut ist.

**5.** Verwendung der flammgeschützten schwarzen thermoplastischen Formmassen gemäß den Ansprüchen 1 bis 4 zur Herstellung von Fasern, Folien und Formkörpern.

**6.** Formkörper, erhältlich aus den flammgeschützten, schwarzen thermoplastischen Formmassen gemäß den Ansprüchen 1 bis 4.

## Claims

**1.** A flameproofed black thermoplastic molding material containing

A) from 5 to 98.9% by weight of a thermoplastic polyamide,

B) from 1 to 20% by weight of red phosphorus,

C) from 0.1 to 5% by weight of a complementary green, blue or violet pigment or a mixture thereof,

D) from 0 to 30% by weight of an elastomeric polymer,

E) from 0 to 50% by weight of a fibrous or particulate filler or of a mixture thereof,

F) from 0 to 70% by weight of a polyphenylene ether and

G) from 0 to 30% by weight of conventional additives and processing assistants, with additional pigments and dyes other than C) being present in amounts of up to 1% by weight,

the percentages by weight of components A to G being 100% in each case.

2. A flameproofed black thermoplastic molding material as claimed in claim 1, wherein the component C) is a copper phthalocyanine pigment.

3. A flameproofed black thermoplastic molding material as claimed in claim 1 or 2, wherein the component C) consists of a manganese violet or ultramarine pigment or of a mixture thereof.

4. A flameproofed black thermoplastic molding material as claimed in any of claims 1 to 3, wherein the component C) is composed of pigments based on chromium oxides or cobalt oxides.

5. The use of a flameproofed black thermoplastic molding material as claimed in any of claims 1 to 4 for the production of fibers, films and moldings.

6. A molding obtainable from a flameproofed, black thermoplastic molding material as claimed in any of claims 1 to 4.

**Revendications**

1. Masses à mouler thermoplastiques noires ignifugées, qui contiennent

   A) 5 à 98,9% en poids d'un polyamide thermoplastique,
   B) 1 à 20% en poids de phosphore rouge,
   C) 0,1 à 5% en poids d'un pigment de teinte verte, bleue ou violette de couleur complémentaire ou de mélanges de tels pigments;
   D) 0 à 30% en poids d'un polymère présentant l'élasticité du caoutchouc,
   E) 0 à 50% en poids d'une charge fibreuse ou particulaire, ou de mélanges de charges de ce genre,
   F) 0 à 70% en poids d'un poly(éther de phénylène),
   G) 0 à 30% en poids d'adjuvants de mise en oeuvre et d'additifs usuels, où sont contenus des pigments supplémentaires et des colorants, qui différent de C), en proportions allant jusqu'à 1% en poids,

   où les pourcentages pondéraux des composants A à G totalisent, à chaque fois, 100%.

2. Masses à mouler thermoplastiques noires ignifugées suivant la revendication 1, caractérisées en ce que le composant C) est une phtalocyanine de cuivre.

3. Masses à mouler thermoplastiques noires ignifugées, suivant la revendication 1 ou 2, caractérisées en ce que le composant C) est constitué d'un pigment manganoviolet ou d'Outremer, ou de mélanges de tels pigments.

4. Masses à mouler thermoplastiques noires ignifugées suivant l'une quelconque des revendications 1 à 3, caractérisées en ce que le composant C) est constitué de pigments à base d'oxydes de chrome ou d'oxydes de cobalt.

5. Utilisation des masses à mouler thermoplastiques noires ignifugées, suivant l'une quelconque des revendications 1 à 4, pour la fabrication de fibres, de feuilles et d'articles ou corps moulés.

6. Articles ou corps moulés que l'on peut obtenir à partir des masses à mouler thermoplastiques noires ignifugées, suivant l'une quelconque des revendications 1 à 4.